# EUROPÄISCHE PATENTANMELDUNG

(11) **EP 2 789 584 A1**
(43) Veröffentlichungstag der Anmeldung: **15.10.2014**
(21) Anmeldenummer: 13163521.1
(22) Anmeldetag: 12.04.2013
(51) Int. Cl.: C01D 15/00, H01M 10/0561

(54) **Reiner Elektrolyt**

(71) Anmelder: LANXESS Deutschland GmbH, 50569 Köln (DE)
(72) Erfinder: Ebenbeck, Wolfgang, 51373 Leverkusen (DE); Boll, Matthias, 51061 Köln (DE); Schlummer, Björn, 53115 Bonn (DE)

(57) **Zusammenfassung**

Die vorliegende Erfindung betrifft reines Lithiumhexafluorophosphat und seine Verwendung in einem Elektrolyt sowie ein Verfahren zur Verminderung des Gehalts an Fluorid in Lithiumhexafluorophosphat.

## Beschreibung

Die vorliegende Erfindung betrifft reines Lithiumhexafluorophosphat und seine Verwendung in einem Elektrolyt sowie ein Verfahren zur Verminderung des Gehalts an Fluorid in Lithiumhexafluorophosphat.

Die Verbreitung von tragbaren elektronischen Geräten, wie z.B. Laptop und Palmtop-Computern, Mobiltelefonen oder Videokameras und damit auch der Bedarf nach leichten und leistungsfähigen Batterien und Akkumulatoren hat in den letzten Jahren weltweit zugenommen. Hinzu kommt in Zukunft die Ausrüstung von Elektrofahrzeugen mit derartigen Akkumulatoren und Batterien.

Lithiumhexafluorophosphat (LiPF₆) hat insbesondere als Leitsalz in der Herstellung von leistungsfähigen Akkumulatoren eine hohe industrielle Bedeutung erlangt. Seit den frühen neunziger Jahren werden wieder aufladbare Lithiumionenakkumulatoren kommerziell angeboten.

Lithiumhexafluorophosphat stellt jedoch eine extrem hydrolyseempfindliche Verbindung mit einer geringen thermischen Stabilität dar, so dass die entsprechenden Lithiumakkumulatoren und auch die Salze aufgrund dieser Eigenschaften nur durch sehr aufwändige und somit auch sehr kostenintensive Verfahren hergestellt werden können. Die entstehenden Hydrolyseprodukte des Lithiumhexafluorophosphats, wie etwa Fluorwasserstoff, verursachen vor allem in Gegenwart von Wasser eine hohe Korrosivität gegenüber einigen im Akkumulator enthaltenen Bauteilen wie etwa der Anode und der Kathode und mindern die Lebensdauer sowie die Leistung von Lithiumionenakkumulatoren daher signifikant.

Als weiteres Kriterium für den Einsatz in Lithiumionenakkumulatoren ist die Reinheit, insbesondere die Abwesenheit von Metallkationen zu nennen. Metallische Verunreinigungen gelangen beispielsweise durch Abrieb von metallischen Reaktorwänden während des Herstellungsprozesses in das Lithiumhexafluorophosphat. Das Vorliegen von Metallkationen kann durch ungewollte Redoxprozesse die Eigenschaften von Elektrolyten beeinflussen.

Um die Funktionsfähigkeit und Lebensdauer und damit die Qualität solcher Akkumulatoren sicherzustellen, ist es somit von besonderer Wichtigkeit, dass die eingesetzten Lithiumverbindungen hochrein sind und somit einen möglichst geringen Gehalt an Fluorid sowie metallischen Verunreinigungen aufweisen.

Aus dem Stand der Technik sind Verfahren zur Herstellung von reinem Lithiumhexafluorophosphat bekannt.

WO 99/062821 A1 beschreibt ein Verfahren zur Herstellung von reinem, gut rieselfähigen Lithiumhexafluorophosphat durch Kristallisation aus organischen Lösungsmitteln, bei dem Lithiumhexafluorophosphat aus einer Lösung in einem aprotischen organischen Lösungsmittel auskristallisiert wird, indem dieser Lösung ein zweites inertes aprotisches Lösungsmittel zugesetzt und das erste Lösungsmittel dann weitgehend abdestilliert wird. Der Gehalt an Fluorwasserstoff liegt hier bei 60 ppm.

US5378445A beschreibt die Herstellung von reinem Lithiumhexafluorophosphat bei dem eine Suspension von Lithiumfluorid in Diethylether angesäuert und anschließend mit Phosphorpentachlorid umgesetzt wird. Diese Mischung wird nach erfolgter Umsetzung neutralisiert, filtriert und entweder zur Trockene eingedampft, oder Lithiumhexafluorophosphat wird mit Hilfe eines Kristallisationshilfsmittels auskristallisiert. Anfallendes Lithiumhexafluorophosphat-Etherat wird dann in Methylcyclohexan gelöst und eingeengt.

Nachteilig an dem oben zitierten Stand der Technik ist die Tatsache, dass zur Erzielung von Lithiumhexafluorophosphat-Feststoff mit hoher Reinheit von Lösungsmittel eine Destillation notwendig ist. Dies führt zu hohen Produktionskosten. Lithiumhexafluorophosphat ist als industrieller Rohstoff insbesondere dann von Interesse, wenn er durch ein möglichst einfaches und technisch beherrschbares Verfahren gewonnen werden kann. Es herrscht daher ein Bedarf an einem einfach zu realisierenden technischen Verfahren mit einer möglichst geringen Anzahl an Verfahrensschritten zur Reduktion des Gehalts an Fluorid in Lithiumhexafluorophosphat-Lösungen.

Demgemäß lag eine Aufgabe der vorliegenden Erfindung in der Entwicklung eines effizienten Verfahrens zur Verringerung von Verunreinigungen in Lithiumhexafluorophosphat.

Die Lösung der Aufgabe und Gegenstand der vorliegenden Erfindung ist nun ein Verfahren zur Herstellung von Lithiumhexafluorophosphat mit geringem Gehalt an Fluorid, umfassend zumindest die Schritte
a) Bereitstellen einer Lösung, enthaltend Lithiumhexafluorophosphat, Fluorid und eines ersten organisches Lösungsmittels enthaltend Nitril
b) Inkontaktbringen mit, weiterem organischen Lösungsmittel, das vom ersten organischen Lösungsmittel verschieden ist, wobei Lithiumhexafluorophosphat ausfällt und c) Abtrennen des ausgefallenen Lithiumhexafluorophosphat.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Die in Schritt a) bereitgestellten Lösungen enthaltend Lithiumhexafluorophosphat, Fluorid und ein erstes organisches Lösungsmittel weisen typischerweise einen Gehalt an Lithiumhexafluorophosphat von 0,1 bis 50,0 Gew.-%, bevorzugt 1,0 bis 45,0 Gew.-%, besonders bevorzugt von 5,0 bis 40,0 Gew.-% auf, wodurch sie insbesondere zu elektrochemische Speichervorrichtungen geeigneten Elektrolyten weiterverarbeitet werden können.

Möglichkeiten zur Herstellung des in den Lösungen in Schritt a) eingesetzten Lithiumhexafluorophosphats sind dem Fachmann bekannt. Beispielsweise kann Lithiumhexafluorophosphat durch Umsetzung von Phosphorpentafluorid und Lithiumfluorid in Diethylether hergestellt werden. Phosphorpentafluorid kann wiederum beispielsweise durch Umsetzung von Calciumfluorid mit Phosphorpentachlorid erhalten werden.

Die im Schritt a) bereitgestellten Lösungen enthaltend Lithiumhexafluorophosphat, Fluorid und ein erstes organisches Lösungsmittel können auf alternative Formen bereitgestellt werden, beispielsweise durch :
Variante a: Erhalt von Lithiumhexafluorophosphat und Fluorid in einem ersten organischem Lösungsmittel aus einem Herstellungsprozess
Variante b: Zugabe von festem, fluoridhaltigen Lithiumhexafluorophosphat zu einem ersten organischen Lösungsmittel
Variante c: Zugabe von einem ersten organischen Lösungsmittel zu festem, fluoridhaltigem Variante d: Bereitstellung von z.B. kommerziell erhältlichen Elektrolyten.
Variante e: Lösen von festem Lithiumhexafluorophosphat in Wasser enthaltendem ersten organischen Lösungsmittel

In den vorgenannten Bereitstellungsformen stammt die Fluorid typischerweise aus dem Herstellungsprozess sowie aus der hydrolytischen Zersetzung des Lithiumhexafluorophosphats durch Spuren anhaftenden Wassers.

Die in Schritt a) bereitgestellten Lösungen, enthaltend Lithiumhexafluorophosphat, Fluorid und ein erstes organisches Lösungsmittel, weisen typischerweise einen Gehalt an Fluorid von 500 bis 10.000 ppm, bevorzugt von 800 bis 6.000 ppm auf. Unter Gehalt an Fluorid ist jene Menge an Fluorid zu verstehen, die gemäß Ionenchromatographie bestimmbar ist, als Summe gelöster Fluoride und Fluorwasserstoff. Die detaillierte Durchführung des Verfahrens finden sich in den Beispielen dieser Erfindung.

Die hierin gemachten ppm-Angaben beziehen sich, sofern nicht explizit anders angegeben, generell auf Gewichtsanteile, die Gehalte der genannten Kationen und Anionen werden durch Ionenchromatographie, gemäß Angaben im experimentellen Teil, ermittelt, sofern nicht anders angegeben.

Das erste organische Lösungsmittel enthält zumindest ein Nitril. Dabei können beispielsweise ein Nitril, eine Kombination aus verschiedenen Nitrilen oder eine Kombination aus zumindest einem Nitril mit zumindest einem organischen Lösungsmittel, das kein Nitril ist, verwendet werden.

Beispiele für geeignete Nitrile sind Acetonitril, Propannitril und Benzonitril. Insbesondere bevorzugt wird Acetonitril eingesetzt, wobei als erstes organisches Lösungsmittel noch weiter bevorzugt Acetonitril ohne ein organisches Lösungsmittel, das kein Nitril ist, eingesetzt wird,

Beispielsweise beträgt das Molverhältnis von eingesetzten Nitrilen zur vorliegenden Menge an Lithiumionen in der in Schritt a) bereitgestellten Lösungen mindestens 1:1, bevorzugt mindestens 10:1 und besonders bevorzugt mindestens 50:1 und ganz besonders bevorzugt mindestens 100:1.

Sofern ein erstes organisches Lösungsmittel organische Lösungsmittel enthält, die kein Nitril sind, werden bevorzugt solche organischen Lösungsmittel verwendet, die bei Raumtemperatur flüssig sind und einen Siedepunkt von 300°C oder weniger bei 1013 hPa aufweisen und die weiterhin zumindest ein Sauerstoffatom oder ein Stickstoffatom oder beide enthalten.

Bevorzugte organische Lösungsmittel sind dabei solche, die keine Protonen aufweisen, die einen pKs-Wert bei 25°C bezogen auf Wasser oder ein wässriges Vergleichssystem von weniger als 20 aufweisen. Solche organischen Lösungsmittel werden in der Literatur auch als "aprotische" Lösungsmittel bezeichnet.

Beispiele für solche weiteren Lösungsmittel sind bei Raumtemperatur flüssige Ester, organische Carbonate, Ketone, Ether, Säureamide oder Sulfone.

Beispiele für Ether sind Diethylether, Diisopropylether, Methyl-tert.-butylether, Ethylenglycoldimethyl und -diethylether, 1,3-Propandioldimethyl und -diethylether, Dioxan und Tetrahydrofuran.

Beispiele für Ester sind Essigsäuremethyl- und -ethylester und Butylacetat oder organische Carbonate wie Dimethylcarbonat (DMC), Diethylcarbonat (DEC) oder Propylencarbonat (PC) oder Ethylencarbonat (EC).

Ein Beispiel für ein Sulfon ist Sulfolan.

Beispiele für Ketone sind Aceton, Methylethylketon und Acetophenon.

Beispiele für Säureamide sind N,N-Dimethylformamid, N,N-Dimethylacetamid, N-Methylformanilid, N-Methylpyrrolidon oder Hexamethylphosphorsäuretriamid.

Das erfindungsgemäße erste organische Lösungsmittel kann auch mehrere der genannten organischen Lösungsmitteln enthalten.

Das erfindungsgemäße weitere organische Lösungsmittel ist dadurch gekennzeichnet, dass im weiteren organischen Lösungsmittel Lithiumhexafluorophosphat eine geringere Löslichkeit als im ersten organischen Lösungsmittel.

Dem Fachmann ist klar dass das Lösungsverhalten von der Temperatur abhängt, insofern ist oben genanntes Erfordernis für die gewählte Temperatur im Schritt b) zu erfüllen.

Die Temperatur beim Inkontaktbringen kann beispiels- und vorzugsweise vom Gefrierpunkt bis zum Siedepunkt des eingesetzten organischen Lösungsmittels oder seiner niedrigstsiedenden Komponente erfolgen, beispielsweise von -45 bis 80°C, besonders bevorzugt von 10 bis 60°C und besonders bevorzugt von 10 bis 35°C, insbesondere von 16 bis 24°C.

Der Druck beim Inkontaktbringen kann beispielsweise von 100 hPa bis 2 MPa betragen, bevorzugt von 900 hPa bis 1200 hPa, Umgebungsdruck ist besonders bevorzugt. Vorzugsweise erfolgt das Inkontaktbringen gemäß Schritt b) über einen Zeitraum von einer Sekunde bis 48 Stunden, bevorzugt von 10 Sekunden bis 2 Stunden, besonders bevorzugt von 30 Sekunden bis 45 Minuten und ganz besonders bevorzugt von 1 Minute bis 30 Minuten.

In einer alternativen Ausführungsform kann nach dem Inkontaktbringen gemäß Schritt b) eine Durchmischung durch Einbringen von Mischenergie z.B. durch statische oder nicht-statische Mischelemente erfolgen.

Als weiteres organisches Lösungsmittel bevorzugt ist Toluol.

Die Löslichkeit von Lithiumhexafluorophosphat im ersten organischen Lösungsmittel und im weiteren organischen Lösungsmittel als solches kann durch einige wenige Vorversuche ermittelt werden.

Das erfindungsgemäße erste organische Lösungsmittel und das weitere organische Lösungsmittel werden vor ihrer Nutzung bevorzugt einem Trocknungsprozess unterzogen, besonders bevorzugt einem Trocknungsprozess über einem Molekularsieb.

Der Gehalt an Verunreinigungen, insbesondere Wasser, des erfindungsgemäßen ersten organischen Lösungsmittels und des weiteren organischen Lösungsmittels sollte möglichst gering sein. In einer Ausführungsform beträgt er von 0 bis 500 ppm, vorzugsweise von 0 bis 200 ppm, besonders bevorzugt von 0 bis 100 ppm und ganz besonders bevorzugt 1 ppm oder weniger.

Das Inkontaktbringen kann beispielsweise derart erfolgen, dass zu vorgelegten bereitgestellten Lösungen aus Schritt a) enthaltend Lithiumhexafluorophosphat, Fluorid und ein erstes organisches Lösungsmittel weiteres organisches Lösungsmittel zudosiert wird.

Das Inkontaktbringen kann bevorzugt dadurch erfolgen, dass die bereitgestellte Lösung aus Schritt a) zu weiterem organischen Lösungsmittel zudosiert wird.

Ebenso ist jede andere Reihenfolge des Inkontaktbringens von Lithiumhexafluorophosphat, Fluorid, einem ersten organischen Lösungsmittel und weiterem organischen Lösungsmittel zur Durchführung des erfindungsgemäßen Verfahrens geeignet.

Das Inkontaktbringen der Lösung, enthaltend Lithiumhexafluorophosphat, Fluorid und ein erstes organisches Lösungsmittel mit weiterem organischen Lösungsmittel kann beispielsweise kontinuierlich, beispielsweise durch Einleiten des weiteren organischen Lösungsmittels oder diskontinuierlich, beispielsweise durch portionsweise Zugabe, bevorzugt durch Zutropfen, von weiterem organischen Lösungsmittel erfolgen. Für das Inkontaktbringen ist jedes, dem Fachmann für das Inkontaktbringen von Lösungen bekannten Gefäß, geeignet. Das Inkontaktbringen kann erleichtert werden durch Einbringen von Mischenergie zum Beispiel durch statische oder nicht-statische Mischelemente.

Das Inkontaktbringen gemäß Schritt b) zu einer Fällung von Lithiumhexafluorophosphat.

In einer weiteren Ausführungsform kann nach Schritt b) weiteres Inkontaktbringen mit weiterem organischen Lösungsmittel oder anderen organischen Lösungsmitteln erfolgen. Dies hat den Zweck, dass neben der Trocknung auch ein weiterer Lösungsmitteltausch erfolgen kann.

Das Abtrennen des ausgefallenen Lithiumhexafluorophosphats kann durch jedes Verfahren erfolgen, das dem Fachmann für die Trennung von Feststoffen und Flüssigkeiten bekannt ist. Beispielsweise kann das Abtrennen erfolgen durch Sedimentation, Zentrifugation oder Filtration, beispielsweise durch Druckfiltration oder Abnutschen. Das Abtrennen kann beispielsweise erfolgen durch Verwendung eines Papierfilters, Polymerfilters, einer Glasfritte oder einer Keramikfritte, insbesondere durch einen Filter mit einer definierten Porengröße, beispielsweise eines Filters mit einer Porengröße von <5 µm, bevorzugt <1 µm, besonders bevorzugt <200 nm.

In einer alternativen Ausführungsform kann nach dem Abtrennen gemäß Schritt c) als weiterer Verfahrensschritt
d) zumindest ein Waschschritt mit organischem Lösungsmittel, vorzugsweise weiterem organischen Lösungsmittel erfolgen.

Durch das erfindungsgemäße Verfahren wird der Gehalt an Fluorid in Lösungen enthaltend Lithiumhexafluorophosphat, Fluorid und ein erstes organisches Lösungsmittel verringert.

In einer bevorzugten Ausführungsform wird durch das erfindungsgemäße Verfahren der Gehalt an Fluorid in Lithiumhexafluorophosphat ausgehend von Lösungen enthaltend Lithiumhexafluorophosphat, Fluorid und ein erstes organisches Lösungsmittel um 50 %, bevorzugt 95% oder mehr, und ganz besonders bevorzugt um 98% oder mehr verringert, wobei sich die Verringerung jeweils auf Fluoridgehalt in Relation zur Trockensubstanz an Lithiumhexafluorophosphat bezieht.

In einer weiteren Ausführungsform beträgt der Gehalt an Fluorid im erfindungsgemäß erthaltenen festen Lithiumhexafluorophosphat beispielsweise weniger als 300 ppm, vorzugsweise weniger als 100 ppm, besonders bevorzugt weniger als 50 ppm.

Die in Schritt a) bereitgestellten Lösungen enthaltend Lithiumhexafluorophosphat, Fluorid und ein erstes organisches Lösungsmittel können in einer alternativen Ausführungsform Verunreinigungen enthalten. Als typische Verunreinigungen seien Chlorid, hydrolytische Zersetzungsprodukte, insbesondere Lithiumdifluorophosphat, Säuren, sowie Metallkationen, insbesondere Calcium, Chrom, Eisen, Magnesium, Molybdän, Cobalt, Nickel, Cadmium, Blei, Kalium oder Natrium und Fremdanionen, insbesondere Sulfat, Hydroxid, Hydrogencarbonat und Carbonat genannt.

Unter Säure ist jede Komponente zu verstehen die zum Gesamtsäuregehalt beiträgt, insbesondere Fluorwasserstoff. Der Gesamtsäuregehalt wird wie in den Beispielen angegeben ermittelt. Substanzen die einen Beitrag zum Gesamtsäuregehalt leisten sind Substanzen, die in wässrigen oder nichtwässrigen Systemen eine Lösung von Bromthymolblau (pKs-Wert 7,10) von blaugrün nach gelb umschlagen lassen. Dazu zählen typischerweise die sauren Hydrolyseprodukte des Lithiumhexafluorophosphat, insbesondere Fluorwasserstoff.

Die in Schritt a) bereitgestellten Lösungen, enthaltend Lithiumhexafluorophosphat, Fluorid und ein erstes organisches Lösungsmittel weisen typischerweise einen Metallgehalt, insbesondere Calcium, Chrom, Eisen, Magnesium, Molybdän, Cobalt, Nickel, Cadmium, Blei, Kalium und Natrium, von 1 bis 2000 ppm, bevorzugt 1 bis 100 ppm und besonders bevorzugt 1 bis 50 ppm auf.

In einer weiteren Ausführungsform wird durch das erfindungsgemäße Verfahren der Chromgehalt in Lithiumhexafluorophosphat ausgehend von Lösungen enthaltend Lithiumhexafluorophosphat, Fluorid und einem ersten organischen Lösungsmittel auf 7 ppm oder weniger verringert, wobei sich die Verringerung jeweils auf Chromgehalt in Relation zur Trockensubstanz an Lithiumhexafluorophosphat bezieht.

In einer weiteren Ausführungsform wird durch das erfindungsgemäße Verfahren der Eisengehalt in Lithiumhexafluorophosphat ausgehend von Lösungen enthaltend Lithiumhexafluorophosphat, Fluorid und einem ersten organischen Lösungsmittel um 60% oder mehrverringert, wobei sich die Verringerung jeweils auf Eisengehalt in Relation zur Trockensubstanz an Lithiumhexafluorophosphat bezieht.

In einer weiteren Ausführungsform wird durch das erfindungsgemäße Verfahren der Nickelgehalt in Lithiumhexafluorophosphat ausgehend von Lösungen enthaltend Lithiumhexafluorophosphat, Fluorid und einem ersten organischen Lösungsmittel auf 3 ppm oder weniger verringert, wobei sich die Verringerung jeweils auf Nickelgehalt in Relation zur Trockensubstanz an Lithiumhexafluorophosphat bezieht.

Die Erfindung betrifft weiterhin die Verwendung des erfindungsgemäß aufgereinigten Lithiumhexafluorophosphats als oder zur Herstellung von Elektrolyten für Lithiumakkumulatoren.

Elektrolyte können nach an sich allgemein bekannten Verfahren durch Inkontaktbringen von Lithiumhexafluorophosphat mit organischem Lösungsmittel und gegebenenfalls Additiven hergestellt werden. Die Erfindung betrifft daher weiterhin ein Verfahren zur Herstellung von Elektrolyten für Lithiumakkumulatoren dadurch gekennzeichnet, dass das eingesetzte Lithiumhexafluorophosphat nach einem Verfahren, umfassend zumindest die Schritte a) bis c) des erfindungsgemäßen Verfahrens umfasst.

Die nach dem erfindungsgemäßen Verfahren hergestellten Elektrolyte können weitere Leitsalze wie beispielsweise Lithiumfluorsulfonylimid enthalten.

Der Vorteil der Erfindung liegt insbesondere in der effizienten und schnellen Verfahrensweise, der hohen erzielbaren Reinheit sowie dem verminderten Gehalt an Fluorid und Metallen des erfindungsgemäß hergestellten Lithiumhexafluorophosphat.

### Beispiele

Im Folgenden sind unter der Angabe "%" immer Gew.-% und unter "ppm" immer "Gew.-ppm" zu verstehen.

"Unter Inertgasbedingung", oder Inertgas bedeutet, dass der Wasser- und der Sauerstoffgehalt der Atmosphäre unterhalb von 1 ppm liegt.

### Bestimmung des Wassergehalts:

Der Wassergehalt wurde, sofern nicht anders angegeben nach dem Verfahren nach Karl-Fischer bestimmt, welches dem Fachmann bekannt ist und zum Beispiel in "Wasserbestimmung durch Karl-Fischer-Titration" von G. Wieland, GIT-Verlag Darmstadt, 1985 beschrieben wird, durch eine Coulombmetrische Titration mit Hilfe eines Titrators (851 KF Titrando der Firma Metrohm) bestimmt.

In Bezug auf die im Rahmen der vorliegenden Arbeiten angewendete Bestimmung der Gesamtsäure sei auf die Publikation M. Schmidt, U. Heider, A. Kuehner, R. Oesten, M. Jungnitz, N. Ignat'ev, P. Sartori, Lithium fluoroalkylphosphates: a new class of conducting salts for electrolytes for high energy lithium-ion batteries. Journal of Power Sources 97-98 (2001) 557-560 sowie die darin zitierte Literatur verwiesen. Für die Bestimmung der Gesamtsäure wurden 1,79 g des Elektrolyt-Feststoffes in 13,21 g eines Gemisches von Ethylencarbonat und Dimethylcarbonat (Gewichtsverhältnis 1:1) unter Kühlung gelöst. Ein Teil der Lösung wurde gemäß der oben zitierten Literaturstelle zur Bestimmung der Gesamtsäure titriert. In einem Glasgefäß wurden unter inerten Bedingungen 0,2 ml Indikatorlösung (50 mg Bromthymolblau in 50 ml wasserfreiem Isopropanol) mit einer 0,01 N Tetrabutylammoniumhydroxidlösung (in wasserfreiem Isopropanol) bis zum Farbumschlag nach blaugrün titriert. Anschließend wurden ca. 1.000 mg Elektrolytlösung auf 0,1 mg genau eingewogen. Es wurde mit 0,01 N Tetrabutylammoniumhydroxidlösung abermals bis zum blaugrünen Farbumschlag titriert, und der Verbrauch an Tetrabutylammoniumhydroxidlösung auf 0,1 mg genau ausgewogen.

In Bezug auf die im Rahmen der vorliegenden Arbeiten verwendete Ionenchromatographie sei auf die Publikation L. Terborg, S. Nowak, S. Passerini, M. Winter, U. Karst, P.R. Haddad, P.N. Nesterenko, Ion chromatographic determination of hydrolysis products of hexafluorophosphate salts in aqueous solution. Analytica Chimica Acta 714 (2012) 121-126 sowie die darin zitierte Literatur verwiesen.

Die Analytik auf vorliegende Ionen (Calcium, Fluorid, Hexafluorophosphat) wurde per Ionenchromatographie durchgeführt. Dazu wurden folgende Geräte und Einstellungen verwendet:

| Gerätetyp: | Dionex ICS 2100 |
|---|---|
| Säule: | IonPac AS20 2*250-mm Analytische Kolonne mit Schutzeinrichtung |
| Probenvolumen: | 1 µl |
| Eluens: | KOH Gradient: 0 min/15 mM, 10 min/15 mM, 13 min/80 mM, 27 min/100 mM, 27,1 min/15 mM, 34 min/15 mM |
| Eluens Flussrate: | 0,25 ml/min |
| Temperatur: | 30°C |
| SRS: | ASRS 300 (2-mm) |

Die Bestimmung des Chromgehalts wurde mittels optischer Emissionspektroskopie mit induktiv gekoppeltem Plasma (ICP-OES, Gerät Varian Vista Pro) durchgeführt.

Sonstige Metallgehalte wurden mittels eines photometrischen Schnelltests der Firma Merck (Spectroquant® Küvettentest) bestimmt. Als Photometer wurde ein Spectroquant Pharo 100 M (Merck) verwendet.

### Beispiel 1 (erfindungsgemäß):

In 50 ml Toluol (6,4 ppm Wassergehalt) wurden 50 g einer filtrierten Lösung (200 nm-Teflonfilter) enthaltend 21,8 Gew.-% Lithiumhexafluorophosphat und 839 ppm Fluorid in Acetonitril (d.h. 3848 ppm bezogen auf Trockensubstanz an festem Lithiumhexafluorophosphat), innerhalb von 10 Minuten unter Rühren zudosiert. Lithiumhexafluorophosphat fiel aus. Danach wurde die Suspension 30 Minuten nachgerührt. Die Suspension wurde unter Inertgasbedingungen über ein Teflonflies mit einer Maschenweite von 5 µm filtriert und der Rückstand mit 50 g Toluol (6,4 ppm Wassergehalt) auf dem Filter gewaschen. Der Rückstand wurde im Argonstrom (600 l/h) für 2 Stunden bei Raumtemperatur getrocknet. Es wurden 3,0 g eines weißen Pulvers erhalten, das in der Ionenchromatographie vermessen wurde. Der Gehalt an Lithiumhexafluorophosphat betrug 90,6 Gew.-% und der Gehalt an Fluorid lag bei nur noch 39 ppm (bezogen auf die Trockenmasse). Bei den auf 100 Gew.-% fehlenden Anteilen handelt es sich um Restlösemittel. Die Verringerung des Gehalts an Fluorid betrug 98%.

### Beispiel 2 (erfindungsgemäß): Alternative Dosierreihenfolge

50 g einer Lösung enthaltend 16,7 Gew.-% Lithiumhexafluorophosphat und 5800 ppm Fluorid in Acetonitril (d.h. 34730 ppm bezogen auf Trockensubstanz an festem Lithiumhexafluorophosphat) wurden über einen Teflonfilter mit einer Porenweite von 200nm filtriert.

Danach wurden 200 g Toluol (15,2 ppm Wassergehalt) innerhalb von 30 Minuten unter Rühren in die Lösung zudosiert.

Lithiumhexafluorophosphat fiel aus. Danach wurde die Suspension wurde 30 Minuten nachgerührt. Die Suspension wurde über eine Drucknutsche abfiltriert. Danach wurde der Rückstand einmal mit 50 g Toluol gewaschen. Der Rückstand wurde im Argonstrom (600 l/h) für 2 Stunden bei Raumtemperatur getrocknet. Es wurden 6,7 g eines weißen Pulvers erhalten, das in der Ionenchromatographie vermessen wurde. Der Gehalt an Lithiumhexafluorophosphat betrug 92,2 Gew.-% und der Gehalt an Fluorid lag bei nur noch 99 ppm (bezogen auf die Trockenmasse). Die Verringerung des Gehalts an Fluorid betrug 99%.

### Beispiel 3 (erfindungsgemäß):

In 200 g Toluol (15,2 ppm Wassergehalt) wurden 50 g einer filtrierten Lösung (200 nm-Teflonfilter) enthaltend 16,7 Gew.-% Lithiumhexafluorophosphat und 5800 ppm Fluorid in Acetonitril (d.h. 34730 ppm bezogen auf Trockensubstanz an festem Lithiumhexafluorophosphat), innerhalb von 30 Minuten unter Rühren zudosiert.

Lithiumhexafluorophosphat fiel aus. Die Suspension wurde 30 Minuten nachgerührt. Die Suspension wurde über eine Drucknutsche abfiltriert. Danach wurde der Rückstand einmal mit 50 g Toluol gewaschen. Der Rückstand wurde im Argonstrom (600 l/h) für 2 Stunden bei Raumtemperatur getrocknet. Es wurden 7,4 g eines weißen Pulvers erhalten, das in der Ionenchromatographie vermessen wurde. Der Gehalt an Lithiumhexafluorophosphat betrug 95,0 Gew.-% und der Gehalt an Fluorid lag bei nur noch 282 ppm (bezogen auf die Trockenmasse). Die Verringerung des Gehalts an Fluorid betrug 99%.

### Beispiel 4 (Vergleichsversuch): Alternative Dosierreihenfolge (Cyclohexan)

50 g einer Lösung enthaltend 18,8 Gew.-% Lithiumhexafluorophosphat in Acetonitril wurden über einen 200 nm-Teflonfilter filtriert.

Danach wurde diese Lösung innerhalb von 30 Minuten unter Rühren in 200 g Cyclohexan (2,3 ppm Wassergehalt) zudosiert.

Es entstand ein zweiphasiges System ohne die Ausfällung von Feststoff.

### Beispiel 5 (erfindungsgemäß): Abreicherung von Schwermetallen

50 g einer Lösung enthaltend 16,7 Gew.-% Lithiumhexafluorophosphat, 5800 ppm Fluorid (d.h. 34730 ppm bezogen auf Trockensubstanz an festem Lithiumhexafluorophosphat) und Metallverunreinigungen (siehe Tabelle 1) in Acetonitril wurden über einen 200 nm-Teflonfilter filtriert.

Danach wurde in diese Lösung, innerhalb einer Minute unter rühren, 200 g Toluol (15,2 ppm Wasser) zudosiert.

Lithiumhexafluorophosphat fiel aus. Die Suspension wurde 30 Minuten nachgerührt. Die Suspension wurde über eine Drucknutsche abfiltriert. Danach wurde der Rückstand einmal mit 50 g Toluol gewaschen. Der Rückstand wurde im Argonstrom (600 l/h) für 2 Stunden bei Raumtemperatur getrocknet. Es wurden 8,0 g eines weißen Pulvers erhalten, das in der Ionenchromatographie vermessen wurde. Der Gehalt an Lithiumhexafluorophosphat betrug 86,0 Gew.-% und der Gehalt an Fluorid lag bei nur noch 226 ppm (bezogen auf die Trockenmasse). Die Verringerung des Gehalts an Fluorid betrug 99%.

Bezogen auf das eingesetzte Lithiumhexafluorophosphat waren folgende Metalle enthalten (Angaben in ppm vor und nach der Kristallisation):

**Tabelle 1. Metallgehalt vor und nach dem Ausfällen**

| **Metall** | **Eingesetztes LiPF₆ [ppm]** | **Aufgereinigtes LiPF₆ [ppm]** |
|---|---|---|
| **Ca** | 3 | 2 |
| **Cr** | 8 | <1 |
| **Fe** | 17 | 2 |
| **Ni** | 3 | 2 |

### Beispiel 6 (erfindungsgemäß): Wäsche von Lithiumhexafluorophosphat mit Acetonitril/Toluol

In eine Suspension von 30 g Lithiumhexafluorophosphat (475 ppm Gesamtsäure) in 150 g Toluol wurden 37,5 g Acetonitril bei -10°C eingetragen und 2 Stunden nachgerührt. Anschließend wurde über einen 200 nm-Teflonfilter filtriert.

Der Filterkuchen wurde mit 50 g Acetonitril/Toluol (Gewichtsverhältnis 1:4) gewaschen. Dieser Vorgang wurde dreimal wiederholt. Der Filterkuchen wurde anschließen im ArgonStrom (600 l/h) trocken geblasen. Es wurde ein weißes Pulvers erhalten, das in der Ionenchromatographie vermessen wurde. Der Gehalt an Gesamtsäure lag nur mehr bei 15 ppm (bezogen auf die Trockenmasse).

| **Metall** | **Eingesetztes LiPF₆ [ppm]** | **Aufgereinigtes LiPF₆ [ppm]** |
|---|---|---|
| **Ca** | 4,8 | 2 |
| **Cr** | 18 | 7 |
| **Fe** | 61 | 22 |
| **Ni** | 12 | 3 |

## Patentansprüche

1. Verfahren zur Herstellung von Lithiumhexafluorophosphat mit geringem Gehalt an Fluorid, umfassend zumindest die Schritte
a) Bereitstellen einer Lösung, enthaltend Lithiumhexafluorophosphat, Fluorid und eines ersten organisches Lösungsmittels enthaltend Nitril
b) Inkontaktbringen mit, weiterem organischen Lösungsmittel, das vom ersten organischen Lösungsmittel verschieden ist, wobei Lithiumhexafluorophosphat ausfällt und
c) Abtrennen des ausgefallenen Lithiumhexafluorophosphat.

2. Verfahren nach Anspruch 1, **dadurch gekennzeichnet, dass** die in Schritt a) bereitgestellten Lösungen enthaltend Lithiumhexafluorophosphat, Fluorid und ein erstes organisches Lösungsmittel einen Gehalt an Lithiumhexafluorophosphat von 0,1 bis 50,0 Gew.-%, bevorzugt 1,0 bis 45,0 Gew.-%, besonders bevorzugt von 5,0 bis 40,0 Gew.-% aufweisen.

3. Verfahren nach Anspruch 1 oder 2, **dadurch gekennzeichnet, dass** die gemäß Schritt a) bereitgestellten Lösungen, enthaltend Lithiumhexafluorophosphat, Fluorid und ein erstes organisches Lösungsmittel, einen Gehalt an Fluorid von 500 bis 10.000 ppm, bevorzugt von 800 bis 6.000 ppm aufweisen.

4. Verfahren nach einem der Ansprüche 1 bis 3, **dadurch gekennzeichnet, dass** als ein erstes organisches Lösungsmittel ein Nitril, eine Kombination aus Nitrilen oder eine Kombination aus zumindest einem Nitril mit zumindest einem Lösungsmittel, das kein Nitril ist, verwendet wird.

5. Verfahren nach einem der Ansprüche 1 bis 4, **dadurch gekennzeichnet, dass** im erfindungsgemäßen, vom ersten organischen Lösungsmittel unterschiedlichen, weiteren organischen Lösungsmittel, bevorzugt Toluol, Lithiumhexafluorophosphat eine geringere Löslichkeit als im ersten organischen Lösungsmittel aufweist

6. Verfahren nach einem der Ansprüche 1 bis 5, **dadurch gekennzeichnet, dass** der Gehalt an Verunreinigungen, insbesondere Wasser, des erfindungsgemäßen ersten organischen Lösungsmittels und des weiteren organischen Lösungsmittels 0 bis 500 ppm, vorzugsweise 0 bis 200 ppm, besonders bevorzugt 0 bis 100 ppm und ganz besonders bevorzugt 1 ppm oder weniger beträgt.

7. Verfahren nach einem der Ansprüche 1 bis 6, **dadurch gekennzeichnet, dass** der Gehalt an Fluorid in Lösungen enthaltend Lithiumhexafluorophosphat, Fluorid und ein erstes organisches Lösungsmittel um 50%, bevorzugt um 95% oder mehr und ganz besonders bevorzugt um 98% oder mehr verringert, wobei sich die Verringerung jeweils auf Fluoridgehalt in Relation zur Trockensubstanz an Lithiumhexafluorophosphat bezieht.

8. Verfahren nach einem der Ansprüche 1 bis 7, **dadurch gekennzeichnet, dass** die in Schritt a) bereitgestellten Lösungen enthaltend Lithiumhexafluorophosphat, Fluorid und ein erstes organisches Lösungsmittel Verunreinigungen, insbesondere Chlorid, hydrolytische Zersetzungsprodukte, insbesondere Lithiumdifluorophosphat, Säuren, sowie Metallkationen, insbesondere Calcium, Chrom, Eisen, Magnesium, Molybdän, Cobalt, Nickel, Cadmium, Blei, Kalium oder Natrium und Fremdanionen, insbesondere Sulfat, Hydroxid, Hydrogencarbonat oder Carbonat, enthält.

9. Verfahren nach einem der Ansprüche 1 bis 8, **dadurch gekennzeichnet, dass** die in Schritt a) bereitgestellten Lösungen, enthaltend Lithiumhexafluorophosphat, Fluorid und ein erstes organisches Lösungsmittel einen Metallgehalt, insbesondere Calcium, Chrom, Eisen, Magnesium, Molybdän, Cobalt, Nickel, Cadmium, Blei, Kalium und Natrium, von 1 bis 2000 ppm, bevorzugt 1 bis 100 ppm und besonders bevorzugt 1 bis 50 ppm aufweisen.

10. Verfahren nach einem der Ansprüche 1 bis 9, **dadurch gekennzeichnet, dass** der Chromgehalt in Lithiumhexafluorophosphat ausgehend von Lösungen enthaltend Lithiumhexafluorophosphat, Fluorid und einem ersten organischen Lösungsmittel auf 7 ppm oder weniger reduziert wird, wobei sich die Verringerung jeweils auf Chromgehalt in Relation zur Trockensubstanz an Lithiumhexafluorophosphat bezieht.

11. Verfahren nach einem der Ansprüche 1 bis 10, **dadurch gekennzeichnet, dass** der Eisengehalt in Lithiumhexafluorophosphat ausgehend von Lösungen enthaltend Lithiumhexafluorophosphat, Fluorid und einem ersten organischen Lösungsmittel um mindestens 60% reduziert wird, wobei sich die Verringerung jeweils auf Eisengehalt in Relation zur Trockensubstanz an Lithiumhexafluorophosphat bezieht.

12. Verfahren nach einem der Ansprüche 1 bis 11, **dadurch gekennzeichnet, dass** der Nickelgehalt in Lithiumhexafluorophosphat ausgehend von Lösungen enthaltend Lithiumhexafluorophosphat, Fluorid und einem ersten organischen Lösungsmittel auf 3 ppm oder weniger reduziert wird, wobei sich die Verringerung jeweils auf Nickelgehalt in Relation zur Trockensubstanz an Lithiumhexafluorophosphat bezieht.

13. Verwendung des Lithiumhexafluorophosphats als oder zur Herstellung von Elektrolyten für Lithiumakkumulatoren.

14. Verfahren zur Herstellung von Elektrolyten für Lithiumakkumulatoren **dadurch gekennzeichnet, dass** es zumindest das vorgenannte erfindungsgemäße Verfahren umfasst.

15. Elektrolyte für Lithiumakkumulatoren, **dadurch gekennzeichnet, dass** er zumindest nach dem vorgenannten erfindungsgemäßen Verfahren hergestellt wird.
